# EUROPEAN PATENT APPLICATION

(11) **EP 4 622 259 A1**
(43) Date of publication of application: **24.09.2025**
(21) Application number: 23890424.7
(22) Date of filing: 07.10.2023
(51) Int. Cl.: H04N 19/172

(54) **INTER-FRAME PREDICTION METHOD, DECODING METHOD, ELECTRONIC DEVICE, AND STORAGE MEDIUM**

(30) Priority: 18.11.2022 CN 202211449177
(71) Applicant: ZTE Corporation, Shenzhen, Guangdong 518057 (CN)
(72) Inventor: BAI, Yaxian, Shenzhen, Guangdong 518057 (CN); HUANG, Cheng, Shenzhen, Guangdong 518057 (CN); ZHANG, Xiaoqu, Shenzhen, Guangdong 518057 (CN)
(74) Representative: Aipex B.V.
(86) International application number: PCT/CN2023/123129
(87) International publication number: WO 2024/103987

(57) **Abstract**

The present application provides an inter-frame prediction method, a decoding method, an electronic device, and a storage medium. The inter-frame prediction method includes acquiring a current video frame and determining a current coding block in the current video frame; determining a first predicted value and a second predicted value of the current coding block; determining a geometric partitioning mode parameter of the current coding block according to a geometric partitioning mode parameter of a target coding block corresponding to the current coding block; and performing a weighted fusion on the first predicted value and the second predicted value according to the geometric partitioning mode parameter of the current coding block to obtain a predicted value of the current coding block.

## Description

### TECHNICAL FIELD

The present application relates to the field of communication technology, for example, an inter-frame prediction method, a decoding method, an electronic device, and a storage medium.

### BACKGROUND

In a video coding and decoding process, a current block may be processed in an intra-frame prediction manner or an inter-frame prediction manner. The inter-frame prediction manner may include motion estimation and motion compensation. As for motion compensation, a Geometric Partitioning Mode (GPM) may be used, where the current block is split into two non-rectangular partitions, the two partitions are predicted separately, and then a weighted fusion is performed to obtain a predicted value of the current block. In a current inter-frame prediction method, a list of 64 preset modes is traversed to determine a GPM split mode, and a decoding end parses a split mode index in a video coding bitstream to determine a split mode used for a coding block, resulting in relatively high computing complexity and transmission overheads.

### SUMMARY

In view of this, embodiments of the present application provide an inter-frame prediction method, a decoding method, an electronic device, and a storage medium, effectively reducing transmission overheads and improving split accuracy.

An embodiment of the present application provides an inter-frame prediction method. The method includes the following:
A current video frame is acquired and a current coding block in the current video frame is determined.

A first predicted value and a second predicted value of the current coding block are determined.

A geometric partitioning mode parameter of the current coding block is determined according to a geometric partitioning mode parameter of a target coding block corresponding to the current coding block.

A weighted fusion is performed on the first predicted value and the second predicted value according to the geometric partitioning mode parameter of the current coding block so that a predicted value of the current coding block is obtained.

An embodiment of the present application provides a decoding method. The method includes the following:
A video coding bitstream is parsed and a predictive decoding parameter of a current coding block in a current video frame is acquired.

A geometric partitioning mode parameter of the current coding block is determined according to the predictive decoding parameter.

Inter-frame prediction is performed on the current coding block using the geometric partitioning mode parameter.

An embodiment of the present application provides an electronic device. The electronic device includes a memory and one or more processors.

The memory is configured to store one or more programs.

When executed by the one or more processors, the one or more programs cause the one or more processors to perform the method of any previous embodiment.

An embodiment of the present application provides a storage medium storing a computer program which, when executed by a processor, causes the processor to perform the method of any previous embodiment.

### BRIEF DESCRIPTION OF DRAWINGS

FIG. 1 is a schematic diagram of implementation of a coding framework according to an embodiment of the present application.
FIG. 2 is a schematic diagram of implementation of a decoding framework according to an embodiment of the present application.
FIG. 3 is a flowchart of an inter-frame prediction method according to an embodiment of the present application.
FIG. 4 is a flowchart of a decoding method according to an embodiment of the present application.
FIG. 5 is a schematic diagram of a configuration of geometric partitioning mode parameters corresponding to split modes according to an embodiment of the present application.
FIG. 6 is a flowchart of implementation of inter-frame prediction according to an embodiment of the present application.
FIG. 7 is a schematic diagram of a configuration of a candidate split mode according to an embodiment of the present application.
FIG. 8 is another flowchart of implementation of inter-frame prediction according to an embodiment of the present application.
FIG. 9 is another schematic diagram of a configuration of a candidate split mode according to an embodiment of the present application.
FIG. 10 is another flowchart of implementation of inter-frame prediction according to an embodiment of the present application.
FIG. 11 is another schematic diagram of a configuration of a candidate split mode according to an embodiment of the present application.
FIG. 12 is another schematic diagram of a configuration of a candidate split mode according to an embodiment of the present application.
FIG. 13 is another schematic diagram of a configuration of a candidate split mode according to an embodiment of the present application.
FIG. 14 is a block diagram of an inter-frame prediction apparatus according to an embodiment of the present application.
FIG. 15 is a block diagram of a decoding apparatus according to an embodiment of the present application.
FIG. 16 is a structural diagram of an electronic device according to an embodiment of the present application.

### DETAILED DESCRIPTION

Embodiments of the present application are described hereinafter in conjunction with drawings. The present application is described hereinafter in conjunction with embodiments and the drawings. The examples described hereinafter are intended to explain the present application and not to limit the scope of the present application.

In the H.266/Versatile Video Coding (VVC) specification, a GPM is supported to perform inter-frame prediction on a coding unit. The GPM includes 64 split modes, and a split mode of each GPM coding unit (CU) is represented by a fixed-length binary code. In a coding process, a list of 64 preset split modes is traversed to determine an optimal split mode with relatively high complexity. For example, assuming that a list of candidate motion vectors (MVs) has a length of N, a total of N×(N-1) possible GPM combinations are present (since two MVs cannot be the same), and an encoder needs to traverse 64 × N × (N-1) = 1920 possible cases with relatively high complexity.

The present application provides an inter-frame prediction method and apparatus and a video decoding method and apparatus so that the accuracy of inter-frame prediction in a geometric partitioning mode can be improved. In the inter-frame prediction method of the present application, in a process of determining a split mode of a current coding block, a split mode calculated in another coding block is used for reference, effectively utilizing edge continuation information of an object in a video frame image, improving split accuracy, and further reducing transmission overheads.

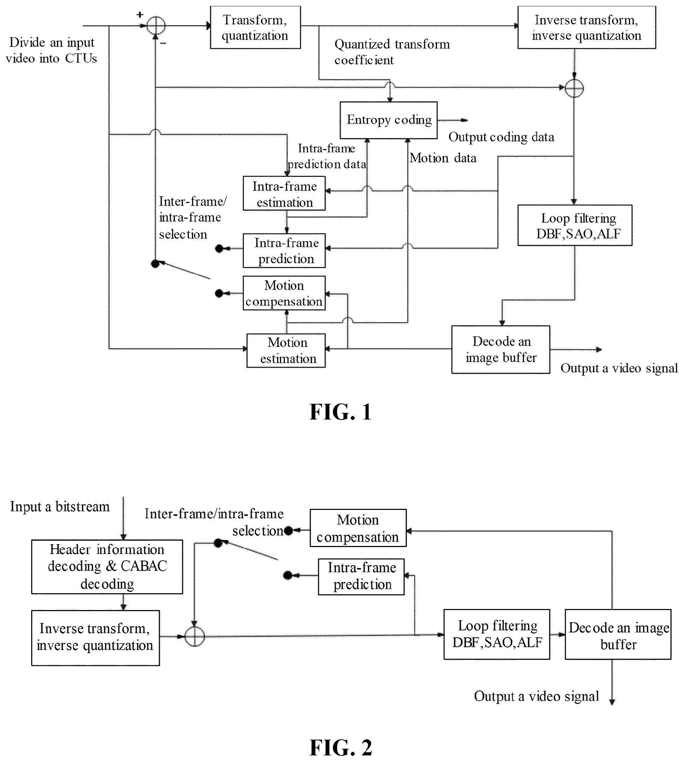

Embodiments of the present application are implemented based on a hybrid coding framework. FIG. 1 is a schematic diagram of implementation of a coding framework according to an embodiment of the present application. As shown in FIG. 1, a coding framework in a new generation video coding standard H.266/VVC may include modules such as intra-frame prediction, inter-frame prediction, transform, quantization, loop filtering, and entropy coding.

An overall framework process of an encoding end is described below.
(1) An input video is divided into frames and then into blocks.
(2) The divided blocks are sent to an intra-frame/inter-frame prediction module to undergo predictive coding. The intra-frame prediction module is mainly configured to remove spatial correlation between images. The inter-frame prediction module is mainly configured to remove temporal correlation between images.
(3) An obtained predicted value is subtracted from an original block to obtain a residual, and the residual is transformed and quantized to remove frequency domain correlation and perform lossy compression on data.
(4) The entropy coding is performed on all coding parameters and residuals to form a binary stream for storage or transmission. Output data of an entropy coding module is a compressed bitstream of the original video.
(5) The predicted value is added to a residual subjected to inverse quantization and inverse transform to obtain a block reconstruction value, and a reconstructed image is formed.
(6) The reconstructed image is filtered by a loop filter and stored in an image buffer to be used as a reference image in the future.

FIG. 2 is a schematic diagram of implementation of a decoding framework according to an embodiment of the present application. As shown in FIG. 2, an overall framework process of a decoding end is described below.
(1) A bitstream is parsed and a prediction mode is acquired to obtain a predicted value.
(2) A residual obtained after the bitstream is parsed is subjected to inverse transform and inverse quantization.
(3) The predicted value is added to the residual subjected to inverse quantization and inverse transform to obtain a block reconstruction value, and a reconstructed image is formed.
(4) The reconstructed image is filtered by a loop filter and stored in an image buffer to be used as a reference image in the future.

It is to be noted that technical solutions provided in embodiments of the present application can be applied to the H.266/VVC standard, Audio Video coding Standard, AVS, (such as AVS3), or next-generation video codec standards, which are not limited in the embodiments of the present application.

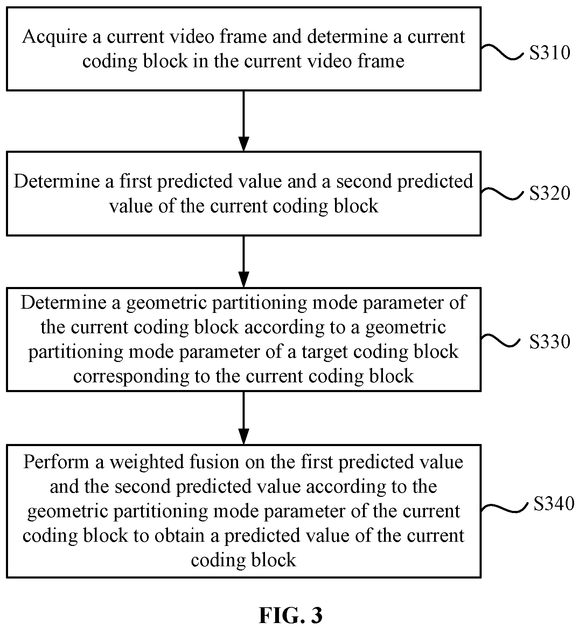

In an embodiment, FIG. 3 is a flowchart of an inter-frame prediction method according to an embodiment of the present application. This embodiment is applied to inter-frame prediction in a video coding process. This embodiment may be implemented by an encoding end. As shown in FIG. 3, this embodiment includes S310 to S340.

In S310, a current video frame is acquired and a current coding block in the current video frame is determined.

The current video frame may be understood as one image frame. In an embodiment, the current video frame may be divided into blocks of multiple coding tree units (CTUs), and one CTU may be divided into multiple CUs using a quadtree with a nested multi-type tree structure, where the CU has one region that can be predicted using a geometric partitioning mode and may also be referred to as one sub-coding unit. It may be understood as that the current video frame is divided into the blocks of the multiple CTUs, each CTU is divided into the multiple CUs to obtain multiple coding blocks, and one coding block is selected from all coding blocks corresponding to the current video frame and used as the current coding block.

In S320, a first predicted value and a second predicted value of the current coding block are determined.

In an embodiment, the current coding block may be split into two non-rectangular sub-partitions, and an MV candidate list in the GPM is generated based on an MV candidate list in a merge mode. An MV is selected from the MV candidate list to perform unidirectional motion compensation on each sub-partition so that two unidirectional predicted values of the current coding block are obtained as the corresponding first predicted value and second predicted value, that is, one non-rectangular sub-partition corresponds to the first predicted value, and the other non-rectangular sub-partition corresponds to the second predicted value.

In S330, a geometric partitioning mode parameter of the current coding block is determined according to a geometric partitioning mode parameter of a target coding block corresponding to the current coding block.

The geometric partitioning mode parameter refers to a slope, split angle, and displacement length corresponding to each geometric partitioning mode. A conventional GPM includes 64 split modes. Each split mode corresponds to one slope and one displacement length, that is, 20 split angles and 4 displacement lengths exist in total. In an embodiment, the geometric partitioning mode parameter of the current coding block may be determined using the geometric partitioning mode parameter of the target coding block corresponding to the current coding block. The target coding block is a coding block related to the current coding block in the current video frame.

In S340, a weighted fusion is performed on the first predicted value and the second predicted value according to the geometric partitioning mode parameter of the current coding block so that a predicted value of the current coding block is obtained.

The predicted value of the current coding block refers to a pixel value predicted for each pixel in the current coding block. In an embodiment, a fusion matrix is obtained according to the distance from a pixel in each sub-partition to a split line, and the fusion matrix is used to perform the weighted fusion on the first predicted value and the second predicted value corresponding to the two sub-partitions so that the predicted value of the current coding block is obtained. Thus, the geometric partitioning mode parameter of the current coding block is predicted or inferred according to the geometric partitioning mode parameter of another coding block, effectively utilizing edge continuation information of the target coding block in the current video frame, improving split accuracy, and further reducing transmission overheads.

In an embodiment, that the geometric partitioning mode parameter of the current coding block is determined according to the geometric partitioning mode parameter of the target coding block corresponding to the current coding block includes the following:
A split mode candidate list of the current coding block is constructed according to the geometric partitioning mode parameter of the target coding block corresponding to the current coding block.

The geometric partitioning mode parameter of the current coding block is determined according to the split mode candidate list.

The split mode candidate list is a list composed of candidate split modes corresponding to the current coding block. In an embodiment, one split mode candidate list may be constructed for the current coding block, where the split mode candidate list includes at most N split modes. The N split modes are traversed to calculate a rate-distortion cost, a split mode with a minimum rate-distortion cost is selected as an optimal split mode of the current coding block, and a geometric partitioning mode parameter corresponding to the optimal split mode is used as the geometric partitioning mode parameter of the current coding block. N is a positive integer greater than or equal to 1.

In an embodiment, the target coding block includes a neighboring coding block; and that the split mode candidate list corresponding to the current coding block is constructed according to the geometric partitioning mode parameter of the target coding block corresponding to the current coding block includes the following:
A geometric partitioning mode parameter of a neighboring coding block corresponding to the current coding block is acquired.

The split mode candidate list corresponding to the current coding block is constructed according to the geometric partitioning mode parameter of the neighboring coding block. In an embodiment, the neighboring coding block refers to a coding block adjacent to the current coding block in spatial domain. The neighboring coding block refers to a coding block adjacent to the current coding block in position in the current video. For example, the neighboring coding block may be located on any side of the current coding block. In an embodiment, a split line of the neighboring coding block has relatively strong similarity, especially for a continuous straight line or curve which usually maintains similar split angles and displacement lengths in multiple neighboring coding blocks. If the split mode of the current coding block is predicted using a split mode of an adjacent coding block in the spatial domain, and a position index of the corresponding coding block is labeled, the number of coding bits required for transmitting split modes can be significantly reduced. In an embodiment, the split mode candidate list corresponding to the current coding block may be constructed according to a preset sequence of neighboring coding blocks of the current coding block. In an embodiment, the preset sequence may be understood as sorting according to the geometric partitioning mode parameter of each neighboring coding block or sorting according to a position relationship between each neighboring coding block and the current coding block.

In an embodiment, the target coding block includes the neighboring coding block; and that the split mode candidate list corresponding to the current coding block is constructed according to the geometric partitioning mode parameter of the target coding block corresponding to the current coding block includes the following:
The geometric partitioning mode parameter of the neighboring coding block corresponding to the current coding block is acquired.

An extension line of a geometric partitioning mode corresponding to the geometric partitioning mode parameter of the neighboring coding block in the current coding block is determined, and a split mode total list is searched for a split mode matching the extension line.

The split mode candidate list corresponding to the current coding block is constructed according to the split mode matching the extension line, where the number of split modes included in the split mode candidate list is less than or equal to the number of neighboring coding blocks. In an embodiment, the split line of the neighboring coding block has relatively strong continuity and usually continues and extends over multiple neighboring coding blocks. If the split mode candidate list of the current coding block is constructed using the extension line of the split mode of the neighboring coding block in the spatial domain in the current coding block, and a split mode in the split mode candidate list is used for GPM prediction, the number of coding bits required for transmitting split modes can be significantly reduced. In an embodiment, in each neighboring coding block corresponding to the current coding block, the known split mode of the neighboring coding block is extended. In the case where the extension line intersects the current coding block, a split mode closest to the extension line in the current coding block is calculated from the split mode total list and added to the split mode candidate list. In an embodiment, the current coding block may correspond to one or more neighboring coding blocks. In the case where the current coding block corresponds to at least two neighboring coding blocks, the known split mode of each neighboring coding block may be extended to obtain the corresponding extension line. In the case where the extension line does not intersect the current coding block, the split mode total list is not searched for the split mode closest to the extension line, that is, the number of split modes included in the split mode candidate list of the current coding block is less than or equal to the total number of neighboring coding blocks corresponding to the current coding block.

In an embodiment, that the geometric partitioning mode parameter of the current coding block is determined according to the split mode candidate list includes the following:
According to the preset sequence, the inter-frame prediction is performed on the current coding block in each split mode in the split mode candidate list so that a rate-distortion cost corresponding to each split mode is obtained as a first rate-distortion cost.

The geometric partitioning mode parameter of the current coding block is determined according to the first rate-distortion cost. In an embodiment, the split mode candidate list is traversed, and GPM inter-frame prediction is performed on the current coding block in each split mode in the split mode candidate list according to the preset sequence so that the rate-distortion cost corresponding to each split mode is obtained as the first rate-distortion cost. A split mode with a minimum first rate-distortion cost is selected from the split mode candidate list and used as the split mode of the current coding block, and a parameter of the split mode is used as the geometric partitioning mode parameter of the current coding block.

In an embodiment, that the geometric partitioning mode parameter of the current coding block is determined according to the split mode candidate list includes the following:
The inter-frame prediction is performed on the current coding block in each split mode in the split mode candidate list so that the rate-distortion cost corresponding to each split mode is obtained as the first rate-distortion cost.

The inter-frame prediction is performed on the current coding block in each split mode in a split mode difference list so that a rate-distortion cost corresponding to each split mode is obtained as a second rate-distortion cost, where the split mode difference list is a difference set between the split mode total list and the split mode candidate list.

The geometric partitioning mode parameter of the current coding block is determined according to the first rate-distortion cost and the second rate-distortion cost. In an embodiment, after the rate-distortion cost corresponding to each split mode in the split mode candidate list is obtained, that is, after the first rate-distortion cost is obtained, split modes in the split mode difference list are traversed, and the GPM inter-frame prediction is performed on the current coding block in each split mode in the split mode difference list so that the rate-distortion cost corresponding to each split mode, that is, the second rate-distortion cost, is obtained. A split mode corresponding to a minimum rate-distortion cost of the first rate-distortion cost and the second rate-distortion cost is selected. If the split mode corresponding to the minimum rate-distortion cost is from the split mode candidate list, it indicates that the GPM uses a split mode inter-frame prediction method. If the split mode corresponding to the minimum rate-distortion cost is from the split mode difference list, it indicates that the GPM does not use the split mode inter-frame prediction method.

In an embodiment, that the geometric partitioning mode parameter of the current coding block is determined according to the geometric partitioning mode parameter of the target coding block corresponding to the current coding block includes the following:
The geometric partitioning mode parameter of the target coding block in the current video frame is acquired.

The split mode candidate list corresponding to the current coding block is constructed according to the geometric partitioning mode parameter of the target coding block.

The geometric partitioning mode parameter of the current coding block is determined in a template matching manner according to the split mode candidate list. The target coding block in the current video frame refers to a coding block associated with the current coding block in the current video frame. In an embodiment, at the encoding end and a decoding end, pixels in an upper coding block and a left coding block of the current coding block are known, and L-shaped neighboring coding blocks formed by the upper coding block and the left coding block of the current coding block may usually be used as a template region for intra-frame prediction or inter-frame prediction. Similarly, the split line of the current coding block also has certain continuity in a neighboring L-shaped template region. If the split mode is predicted based on the known pixels in the neighboring coding blocks at the encoding end and the decoding end, the number of coding bits required for transmitting split modes can be significantly reduced. In an embodiment, after the split mode candidate list of the current coding block is constructed, multiple split modes in the split mode candidate list are each extended to the template region corresponding to the current coding block, and the GPM inter-frame prediction is performed so that corresponding rate-distortion costs are calculated. A split mode corresponding to a minimum rate-distortion cost is used as the split mode of the current coding block, that is, the geometric partitioning mode parameter of the current coding block is obtained.

In an embodiment, that the split mode candidate list corresponding to the current coding block is constructed according to the geometric partitioning mode parameter of the target coding block includes the following:
According to an extension line, in the current coding block, of the geometric partitioning mode parameter of the target coding block in the current video frame, the split mode total list is searched for a split mode matching the extension line.

The split mode candidate list corresponding to the current coding block is constructed according to the split mode matching the extension line. In an embodiment, a split mode corresponding to the target coding block is determined according to the geometric partitioning mode parameter of the target coding block, and the split mode corresponding to the target coding block is extended to obtain the corresponding extension line. In the case where the extension line intersects the current coding block, the split mode closest to the extension line is calculated from the split mode total list and added to the split mode candidate list.

In an embodiment, the target coding block in the current video frame includes the neighboring coding block of the current coding block in the current video frame, a coding block in a preset neighboring range of the current coding block in the current video frame, or a coding block searched for along a preset direction of the current coding block in the current video frame.

In an embodiment, the neighboring coding block of the current coding block refers to a coding block adjacent to the current coding block in position in the current video frame; the coding block in the preset neighboring range of the current coding block refers to a coding block in a preset range corresponding to the current coding block; the coding block searched for along the preset direction of the current coding block refers to a coding block searched for in the preset neighboring range of the current coding block according to the preset direction and a step size specified.

In an embodiment, that the geometric partitioning mode parameter of the current coding block is determined in the template matching manner according to the split mode candidate list includes the following:
The template region corresponding to the current coding block in the current video frame is constructed.

The inter-frame prediction is performed on the template region in each split mode in the split mode candidate list so that a rate-distortion cost corresponding to each split mode is obtained as a third rate-distortion cost.

The geometric partitioning mode parameter of the current coding block is determined according to the third rate-distortion cost. In an embodiment, the template region may include an upper region and a left region of the current coding block. In an embodiment, according to a size of the current coding block and a size of the current coding block in a first direction, an upper neighboring region of the current coding block is selected, a left neighboring region of the current coding block is selected according to a size of the current coding block in a second direction, and the upper neighboring region and the left neighboring region are merged into the template region of the current coding block. In an embodiment, if the upper neighboring region or the left neighboring region does not exist for the current coding block, one side may be selected as the corresponding template region. In an embodiment, the split mode candidate list is traversed, the inter-frame prediction is performed on the template region in each split mode in the split mode candidate list so that the rate-distortion cost corresponding to each split mode is obtained as the third rate-distortion cost, and a split mode corresponding to a minimum rate-distortion cost of all third rate-distortion costs is selected as the split mode of the current coding block, that is, the geometric partitioning mode parameter of the current coding block is obtained.

In an embodiment, that the geometric partitioning mode parameter of the current coding block is determined in the template matching manner according to the split mode candidate list includes the following:
The template region corresponding to the current coding block in the current video frame is constructed.

The inter-frame prediction is performed on the template region in each split mode in the split mode candidate list so that the rate-distortion cost corresponding to each split mode is obtained as the third rate-distortion cost.

The inter-frame prediction is performed on the current coding block in each split mode in the split mode total list so that a rate-distortion cost corresponding to each split mode is obtained as a fourth rate-distortion cost.

The geometric partitioning mode parameter of the current coding block is determined according to the third rate-distortion cost and the fourth rate-distortion cost. In an embodiment, after the third rate-distortion cost is obtained, the inter-frame prediction is performed on the current coding block in each split mode in the split mode total list so that the rate-distortion cost corresponding to each split mode is obtained as the fourth rate-distortion cost, and a split mode corresponding to a minimum rate-distortion cost of all third rate-distortion costs and all fourth rate-distortion costs is selected. If the split mode with the minimum rate-distortion cost corresponds to the third rate-distortion cost, it is indicated in a bitstream that the GPM uses a split mode prediction method. If the split mode with the minimum rate-distortion cost corresponds to the fourth rate-distortion cost, it is indicated in the bitstream that the GPM does not use the split mode prediction method, and an index of the split mode of the current coding block in the split mode total list is indicated.

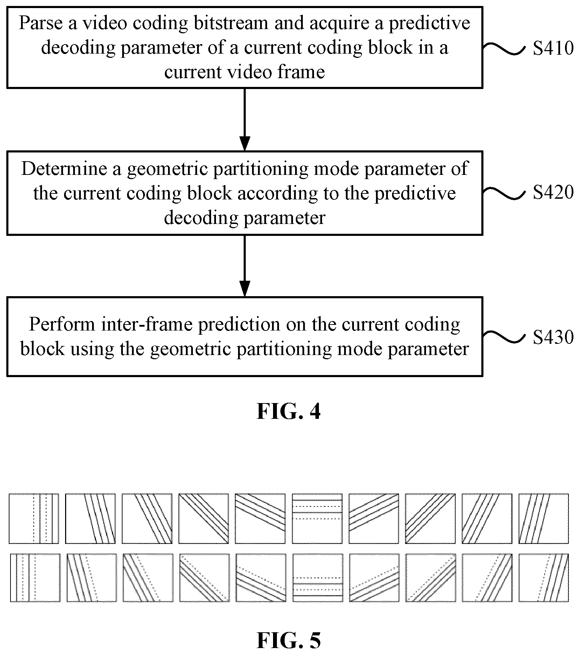

In an embodiment, FIG. 4 is a flowchart of a decoding method according to an embodiment of the present application. This embodiment is applied to inter-frame prediction in a video decoding process. This embodiment may be implemented by a decoding end. In an embodiment, in the case where a current coding block uses an inter-frame prediction manner based on a split mode, the decoding end may use the same manner as an encoding end to predict the split mode of the current coding block and obtain a predicted value of the current coding block.

As shown in FIG. 4, this embodiment includes S410 to S430.

In S410, a video coding bitstream is parsed and a predictive decoding parameter of a current coding block in a current video frame is acquired.

In an embodiment, the encoding end sends the current video frame and the predictive decoding parameter of the current coding block in the current video frame to the decoding end through the video coding bitstream.

In S420, a geometric partitioning mode parameter of the current coding block is determined according to the predictive decoding parameter.

In an embodiment, the predictive decoding parameter may carry a split mode prediction indicator corresponding to the current coding block. In an embodiment, the decoding end may determine, according to the split mode prediction indicator, whether the current coding block uses a split mode prediction method. In the case where the split mode prediction method is used, the geometric partitioning mode parameter of the current coding block may be determined by the inter-frame prediction method according to the preceding embodiments.

In S430, the inter-frame prediction is performed on the current coding block using the geometric partitioning mode parameter.

In an embodiment, the inter-frame prediction is performed on the current coding block according to the geometric partitioning mode parameter of the current coding block.

In an embodiment, that the geometric partitioning mode parameter of the current coding block is determined according to the predictive decoding parameter includes the following:
The split mode prediction indicator is acquired.

In the case where the split mode prediction indicator has a first value, it is determined that the current coding block uses the split mode prediction method.

A split mode candidate list corresponding to the current coding block is constructed by the inter-frame prediction method according to any one of the preceding embodiments.

The geometric partitioning mode parameter of the current coding block is determined according to a split mode prediction index and the split mode candidate list. In an embodiment, the split mode prediction indicator is used for indicating whether the current coding block uses the split mode prediction method. In an embodiment, in the case where the split mode prediction indicator has the first value, the current coding block uses the split mode prediction method, the split mode candidate list corresponding to the current coding block is constructed by the inter-frame prediction method according to the preceding embodiments, and the split mode of the current coding block is selected from the split mode candidate list according to the split mode prediction index, that is, the geometric partitioning mode parameter of the current coding block is obtained.

In an embodiment, the split mode prediction index is used for identifying an index of the split mode of the current video frame in the split mode candidate list.

In an embodiment, that the geometric partitioning mode parameter of the current coding block is determined according to the predictive decoding parameter includes the following:
The split mode prediction indicator is acquired.

In the case where the split mode prediction indicator has the first value, it is determined that the current coding block uses the split mode prediction method.

The split mode candidate list corresponding to the current coding block is constructed by the inter-frame prediction method according to any one of the preceding embodiments.

The geometric partitioning mode parameter of the current coding block is determined in a template matching manner according to the split mode candidate list. For the explanation of the split mode prediction indicator, reference is made to the description in the preceding embodiments, and the details are not repeated here. In an embodiment, in the case where the split mode prediction indicator has the first value, the current coding block uses the split mode prediction method, the split mode candidate list corresponding to the current coding block is constructed by the inter-frame prediction method according to the preceding embodiments, and the split mode of the current coding block is selected from the split mode candidate list in the template matching manner, that is, the geometric partitioning mode parameter of the current coding block is obtained. For a process of determining the geometric partitioning mode parameter of the current coding block in the template matching manner according to the split mode candidate list, reference is made to the specific implementation manner in the preceding embodiments, and the details are not repeated here.

In an embodiment, that the geometric partitioning mode parameter of the current coding block is determined according to the predictive decoding parameter includes the following:
The split mode prediction indicator is acquired.

In the case where the split mode prediction indicator has a second value, it is determined that the current coding block does not use the split mode prediction method.

The geometric partitioning mode parameter of the current coding block is determined according to the split mode prediction index and a pre-created split mode total list. In an embodiment, in the case where the split mode prediction indicator has the second value, the current coding block does not use the split mode prediction method, and the split mode of the current coding block is selected from the split mode total list according to the split mode prediction index, that is, the geometric partitioning mode parameter of the current coding block is obtained.

It is to be noted that for the explanation of parameters such as the split mode candidate list, the split mode total list, the geometric partitioning mode parameter, and the split mode in the decoding method, reference is made to the description of the corresponding parameters in the preceding embodiments of the inter-frame prediction method, and the details are not repeated here.

In an embodiment, this embodiment provides an inter-frame prediction method used in a video coding process. In the case where a current coding block uses an inter-frame prediction mode based on a geometric partitioning mode, a split mode of the current coding block is predicted using a determined split mode of a neighboring coding block, thereby reducing transmission overheads. The inter-frame prediction method includes the steps below.

In step 1, a current video frame is acquired and a current coding block in the current video frame is determined.

The current video frame is acquired and the current coding block in the current video frame is determined. An image division structure divides the input current video frame into blocks referred to as CTUs and divides one CTU into CUs by using a quadtree with a nested multi-type tree structure, where a CU is a leaf coding unit with a region that uses the inter-frame prediction mode.

In step 2, it is determined that split mode inter-frame prediction is used for the current coding block.

In an embodiment, in the coding process, a geometric partitioning mode parameter of the current coding block is usually determined in a rate-distortion optimization (RDO) manner. In the case of video coding, according to geometric partitioning mode parameters for the current coding block, predictive coding may be separately performed on a to-be-predicted image component in multiple split modes, a rate-distortion cost result corresponding to each split mode of the multiple split modes may be calculated, a minimum rate-distortion cost result may be selected from multiple rate-distortion cost results calculated, and a split mode corresponding to the minimum rate-distortion cost result may be determined as the geometric partitioning mode parameter of the current coding block.

In step 3, the split mode of the current coding block is predicted using the determined split mode of the neighboring coding block.

A conventional GPM includes a total of 64 split modes. FIG. 5 is a schematic diagram of a configuration of geometric partitioning mode parameters corresponding to split modes according to an embodiment of the present application. As shown in FIG. 5, each split mode corresponds to one slope and one displacement length, that is, 20 angles and 4 displacement lengths exist in total. However, a split line of the neighboring coding block in spatial domain has relatively strong similarity, especially for a continuous straight line or curve which usually maintains similar split angles and displacement lengths in multiple neighboring coding blocks. If the split mode of the current coding block is predicted using the split mode of the neighboring coding block in the spatial domain, and a position index of the corresponding coding block is labeled, the number of coding bits required for transmitting split modes can be significantly reduced. Operations are performed according to embodiments of split mode prediction method 1 and split mode prediction method 2 described below.

In step 4, for the current coding block, a predicted value of the current coding block is acquired by a split mode inter-frame prediction method.

In the case where the current coding block uses the GPM inter-frame prediction mode, the current coding block is split into two non-rectangular sub-partitions, and an MV candidate list in the GPM is generated based on an MV candidate list in a merge mode. An MV is selected from the MV candidate list to perform unidirectional motion compensation on each sub-partition so that two unidirectional predicted values of the current coding block, that is, a first predicted value and a second predicted value, are obtained. A fusion matrix is obtained according to the distance from a pixel in each partition to a split line, and the matrix is used to perform a weighted fusion on the unidirectional predicted values of the two sub-partitions so that the final predicted value of the current coding block is obtained.

In step 5, the split mode prediction method is indicated to a decoding end through a switch indicator.

An encoding end calculates rate-distortion costs according to the predicted value of the current coding block to determine the split mode and the geometric partitioning mode parameter of the current coding block. The determined split mode prediction method is indicated to the decoding end through the switch indicator and an index (optional), and a GPM inter-frame prediction mode parameter is indicated to the decoding end through a merge mode index.

In an embodiment, in split mode prediction method 1, a split mode candidate list is generated in three manners.

In an implementation manner, the candidate list is generated based on a neighboring coding block.

A split line of the neighboring coding block in spatial domain has relatively strong similarity, especially for a continuous straight line or curve which usually maintains similar split angles and displacements in multiple neighboring coding blocks. If a split mode of a current coding block is predicted using a split mode of the neighboring coding block in the spatial domain, and a position index of the corresponding coding block is labeled, the number of coding bits required for transmitting split modes can be significantly reduced.

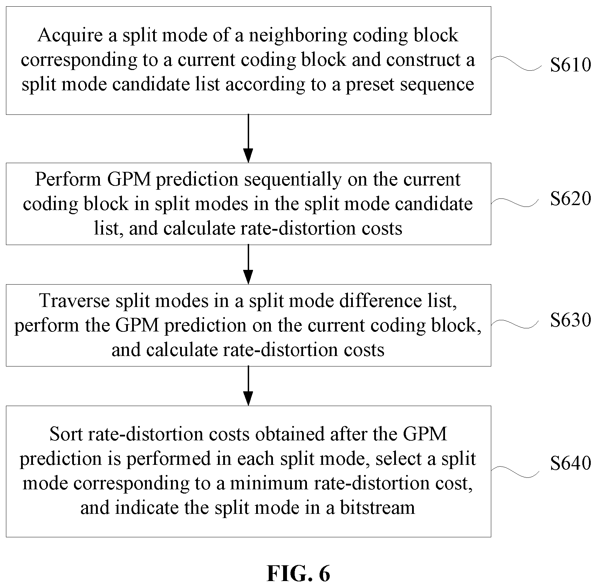

In this embodiment, one split mode candidate list is established for the current coding block, and the list includes at most N split modes. N candidate split modes are traversed, rate-distortion costs are calculated, and one with a minimum rate-distortion cost is selected as an optimal split mode of the current coding block. A decoding end may establish the split mode candidate list in the same manner. Therefore, an encoder needs to transmit only an index of the optimal split mode in the candidate list, significantly reducing the number of coding bits for transmitting 64 split modes. FIG. 6 is a flowchart of implementation of inter-frame prediction according to an embodiment of the present application. As shown in FIG. 6, the inter-frame prediction in this embodiment includes S610 to S640.

In S610, the split mode of the neighboring coding block corresponding to the current coding block is acquired and the split mode candidate list is constructed according to a preset sequence.

In an embodiment, the split mode candidate list (SMList) is constructed according to the preset sequence of neighboring coding blocks of the current coding block.

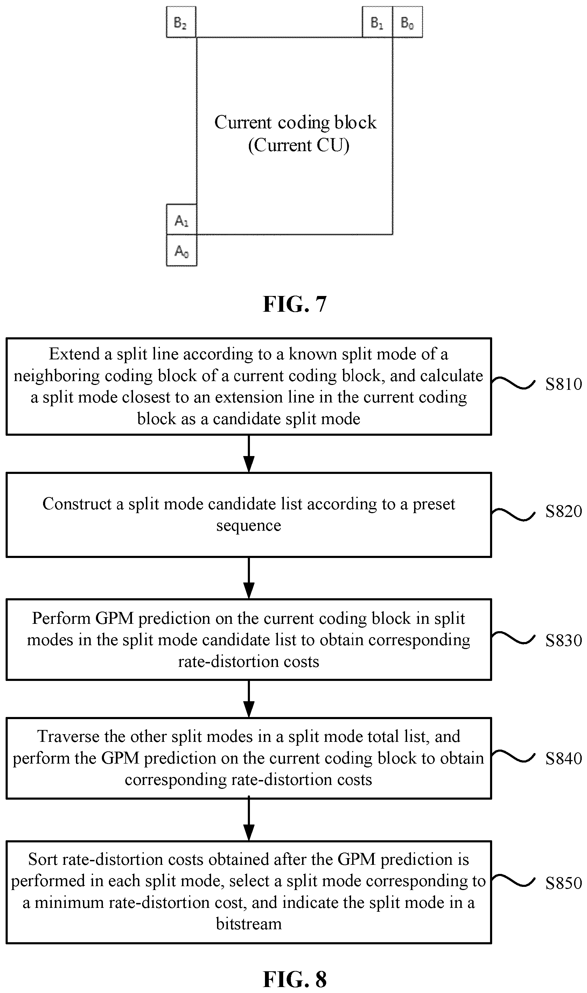

The establishment of the split mode candidate list is described using an example in which N = 5. FIG. 7 is a schematic diagram of a configuration of a candidate split mode according to an embodiment of the present application. As shown in FIG. 7, Current CU represents the current coding block, A1 represents a lowest CU on the left side of the current coding block, B1 represents a rightmost CU on the upper side of the current coding block, B0 and A0 represent closest blocks on the upper right and lower left of the current coding block respectively, and B2 represents a closest CU on the upper left of the current coding block. The split mode candidate list is established according to the preset sequence, for example, A1 -> B1 -> B0 -> A0 -> B2, where a known split mode of a corresponding CU is selected at each indexed position. If one or more of A1, B1, B0, and A0 do not exist, the corresponding position is empty. If no known split mode exists in all neighboring blocks, a traditional GPM split mode selection manner is used.

It is to be noted that the construction of the 5 split mode candidate lists is an example here, and any other sequence may be used in a specific implementation.

In S620, GPM prediction is sequentially performed on the current coding block in the split modes in the split mode candidate list, and the rate-distortion costs are calculated.

In an embodiment, the split mode candidate list is traversed, GPM inter-frame prediction is separately performed on the current coding block in the N split modes according to steps 1 to 5 in the preceding embodiment, and RDO costs are calculated.

In S630, split modes in a split mode difference list are traversed, the GPM prediction is performed on the current coding block, and rate-distortion costs are calculated.

In an embodiment, the other split modes of the 64 split modes are traversed, the GPM prediction is performed on the current coding block in the other split modes, and RDO costs are calculated.

In S640, rate-distortion costs obtained after the GPM prediction is performed in each split mode are sorted, and a split mode corresponding to a minimum rate-distortion cost is selected and indicated in a bitstream.

In an embodiment, a split mode with a minimum RDO cost is selected. If the mode is from the SMList, it is indicated in the bitstream that the GPM uses a Split Mode, SM, prediction method, and an index of the split mode selected for the current coding block in the SMList is indicated. If the mode is from the other split modes than the SMList, it is indicated in the bitstream that the GPM does not use the SM prediction method, and an index of the split mode selected for the current coding block among the 64 split modes is indicated.

In an implementation manner, the split mode candidate list is generated based on an extension line.

The split line of the neighboring coding block in the spatial domain has relatively strong continuity and usually continues and extends over multiple neighboring coding blocks. If an extension line of the split mode of the neighboring coding block in the spatial domain in the current coding block is used as a split mode for GPM prediction, and the position index of the corresponding coding block is labeled, the number of coding bits required for transmitting split modes can be significantly reduced.

In this embodiment, one split mode candidate list based on split extension of the neighboring coding block is established for the current coding block, and the split mode candidate list includes at most N split modes. The N candidate split modes are traversed, the rate-distortion costs are calculated, and one with the minimum rate-distortion cost is selected as the optimal split mode of the current coding block, thereby saving coding bits for transmission. FIG. 8 is another flowchart of implementation of inter-frame prediction according to an embodiment of the present application. As shown in FIG. 8, the inter-frame prediction in this embodiment includes S810 to S850.

In S810, the split line is extended according to the known split mode of the neighboring coding block of the current coding block, and a split mode closest to the extension line in the current coding block is calculated as a candidate split mode.

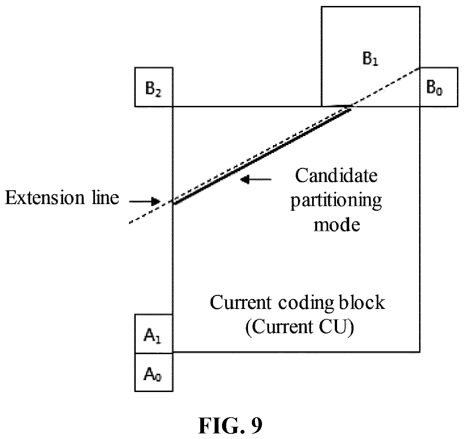

For example, N = 5, and 5 neighboring coding blocks adjacent to the current coding block are selected. FIG. 9 is another schematic diagram of a configuration of a candidate split mode according to an embodiment of the present application. As shown in FIG. 9, Current CU represents the current coding block, A1 represents the lowest CU on the left side of the current coding block, B1 represents the rightmost CU on the upper side of the current coding block, B0 and A0 represent the closest blocks on the upper right and lower left of the current coding block respectively, and B2 represents the closest CU on the upper left of the current coding block. The known split mode of each neighboring coding block is extended. In the case where the extension line intersects the current coding block, the split mode closest to the extension line in the current coding block is calculated from the 64 split modes and used as the candidate split mode.

In S820, the split mode candidate list is constructed according to the preset sequence.

The list is established according to the preset sequence, for example, A1 -> B1 -> B0 -> A0 -> B2, where the candidate split mode calculated in step 1 is selected at each indexed position. If one or more of A1, B1, B0, and A0 do not exist or the extension line of the split mode does not intersect the current block, the corresponding position is empty. If no known split mode exists in all the neighboring blocks, the traditional GPM split mode selection manner is used.

It is to be noted that the construction of the 5 split mode candidate lists is an example here, and any other sequence may be used in a specific implementation.

In S830, the GPM prediction is performed on the current coding block in the split modes in the split mode candidate list, and the corresponding rate-distortion costs are calculated.

In an embodiment, the split mode candidate list is traversed, the GPM inter-frame prediction is separately performed on the current coding block in the N split modes according to steps 1 to 5 in the preceding embodiment, and the RDO costs are calculated.

In S840, the other split modes in a split mode total list are traversed, the GPM prediction is performed on the current coding block, and the corresponding rate-distortion costs are obtained.

In an embodiment, the split mode total list includes the 64 split modes, the other split modes of the 64 split modes are traversed, and the RDO costs are calculated.

In S850, the rate-distortion costs obtained after the GPM prediction is performed in each split mode are sorted, and the split mode corresponding to the minimum rate-distortion cost is selected and indicated in the bitstream.

In an embodiment, the split mode with the minimum RDO cost is selected. If the mode is from the SMList, it is indicated in the bitstream that the GPM uses the SM prediction method, and the index of the split mode selected for the current coding block in the SMList is indicated. If the split mode is from the other split modes than the SMList, it is indicated in the bitstream that the GPM does not use the SM prediction method, and the index of the split mode selected for the current coding block among the 64 split modes is indicated.

### Split mode prediction method 2: Template matching

In an implementation, split modes are screened based on a neighboring coding block.

At an encoding end and a decoding end, neighboring pixels on the upper and left sides of a current coding block are known. Therefore, L-shaped neighboring coding blocks on the upper and left sides of the current coding block are usually used as a template region for intra-frame prediction or inter-frame prediction. Similarly, a split line of the current coding block also has certain continuity in a neighboring L-shaped template. If a split mode is predicted based on known pixels in the neighboring coding blocks at the encoding end and the decoding end, the number of coding bits required for transmitting split modes can be significantly reduced.

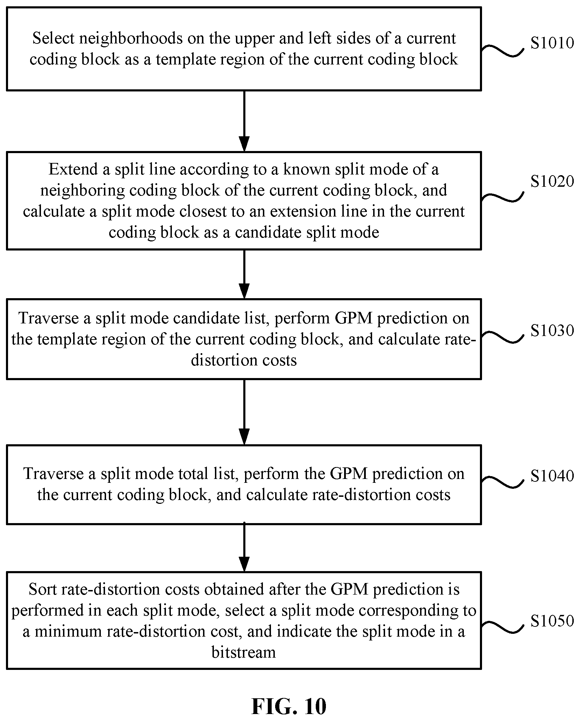

In this embodiment, GPM prediction is performed on the L-shaped template of the current coding block according to a known split mode of the neighboring coding block of the current coding block, rate-distortion costs are calculated, and one with a minimum rate-distortion cost is selected as an optimal split mode of the current coding block. The decoding end may select the split mode in the same manner. Therefore, an encoder needs to transmit only a switch indicator, significantly reducing the number of coding bits for transmitting 64 split modes. FIG. 10 is another flowchart of implementation of inter-frame prediction according to an embodiment of the present application. As shown in FIG. 10, the inter-frame prediction in this embodiment includes S1010 to S1050.

In S1010, neighborhoods on the upper and left sides of the current coding block are selected as the template region of the current coding block.

In an embodiment, assuming that a size of the current coding block is m×n, a neighboring region of size m×j on the upper side of the current coding block is selected, a neighboring region of size k×n on the left side of the current coding block is selected, and the neighboring regions are merged into the template region of the current coding block. If an upper neighboring region or a left neighboring region does not exist for the current coding block, only one side is selected as the template region. If neither the upper neighboring region nor the left neighboring region exists for the current coding block, a traditional GPM split mode selection manner is used.

In S1020, a split line is extended according to the known split mode of the neighboring coding block of the current coding block, and a split mode closest to an extension line in the current coding block is calculated as a candidate split mode.

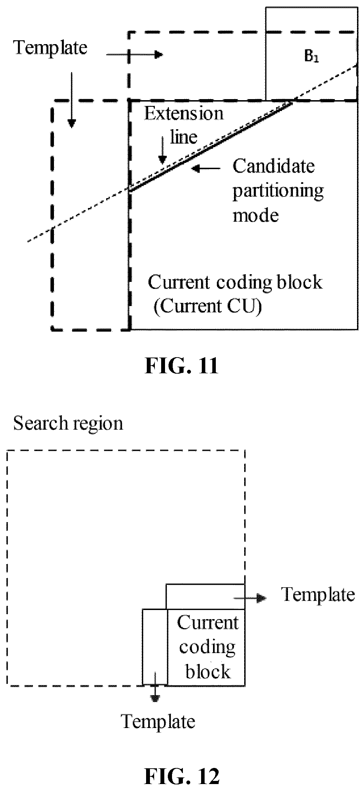

For example, N = 5, and 5 neighboring coding blocks adjacent to the current coding block are selected. FIG. 11 is another schematic diagram of a configuration of a candidate split mode according to an embodiment of the present application. As shown in FIG. 11, Current CU represents the current coding block, and the template is the template region in the preceding embodiment. The known split mode of each neighboring coding block is extended. In the case where the extension line intersects the current coding block, the split mode closest to the extension line in the current coding block is calculated from the 64 split modes and used as the candidate split mode.

In S1030, a split mode candidate list is traversed, the GPM prediction is performed on the template region of the current coding block, and rate-distortion costs are calculated.

In an embodiment, the split mode candidate list is traversed, the N split modes are separately extended on the template region of the current coding block, GPM prediction is performed according to steps 1 to 5 in the preceding embodiment, and RDO costs are calculated.

In S1040, a split mode total list is traversed, the GPM prediction is performed on the current coding block, and rate-distortion costs are calculated.

In an embodiment, the split mode total list includes the 64 split modes, the 64 split modes are traversed in the current coding block to perform the GPM inter-frame prediction, and RDO costs are calculated.

In S1050, the rate-distortion costs obtained after the GPM prediction is performed in each split mode are sorted, and a split mode corresponding to the minimum rate-distortion cost is selected and indicated in a bitstream.

In an embodiment, a prediction mode with a minimum RDO cost is selected. If the minimum RDO cost is obtained in S1030, it is indicated in the bitstream that the GPM uses an SM prediction method. If the minimum RDO cost is obtained in S1040, it is indicated in the bitstream that the GPM does not use the SM prediction method, and an index of the split mode selected for the current coding block among the 64 split modes is indicated.

In an implementation manner, the split modes are screened based on a preset neighboring range.

In this embodiment, the GPM prediction is performed on the L-shaped template of the current coding block according to a known split mode in a preset neighborhood of the current coding block, the rate-distortion costs are calculated, and one with the minimum rate-distortion cost is selected as the optimal split mode of the current coding block. The decoding end may select the split mode in the same manner in the same neighborhood, and the encoder needs to transmit only the switch indicator. Specific steps are described below.
(1) The template region of the current coding block is determined as in S1010 of the preceding embodiment.
(2) The preset neighborhood of the current coding block is searched for the known split mode, and a split line is extended to obtain a candidate split mode.
   A process of determining a target coding block is described by using a neighborhood of size w×h as an example. FIG. 12 is another schematic diagram of a configuration of a candidate split mode according to an embodiment of the present application. As shown in FIG. 12, Current CU represents the current coding block, and the template is the template region in the preceding embodiment. The neighborhood is searched for all known split modes, and the known split modes are extended. In the case where the extension line intersects the current coding block, the split mode closest to the extension line in the current coding block is calculated from the 64 split modes and used as the candidate split mode. A total of N candidate split modes are obtained in the neighborhood of w×h.
(3) The candidate split modes obtained in step 2 are traversed, the N split modes are separately extended on the template region of the current coding block, the GPM inter-frame prediction is performed, and the RDO costs are calculated.
(4) The 64 split modes are traversed in the current coding block, the GPM inter-frame prediction is performed, and the RDO costs are calculated.
(5) The prediction mode with the minimum RDO cost is selected. If the minimum RDO cost is obtained in step 3, it is indicated in the bitstream that the GPM uses the SM prediction method. If the minimum RDO cost is obtained in step 4, it is indicated in the bitstream that the GPM does not use the SM prediction method, and the index of the split mode selected for the current coding block among the 64 split modes is indicated.

In an implementation manner, the split modes are screened based on a preset direction.

In this embodiment, the preset neighborhood of the current coding block is searched for the known split mode according to the preset direction and a step size specified, the GPM prediction is performed on the L-shaped template region of the current coding block accordingly, the rate-distortion costs are calculated, and one with the minimum rate-distortion cost is selected as the optimal split mode of the current coding block. The decoding end may select the split mode in the same manner in the same neighborhood, and the encoder needs to transmit only the switch indicator. Specific steps are described below.
(1) The template region of the current coding block is determined as in S1010 of the preceding embodiment.
(2) The preset neighborhood of the current block is searched for the known split mode in a specified search direction, and the split line is extended to obtain the candidate split mode.

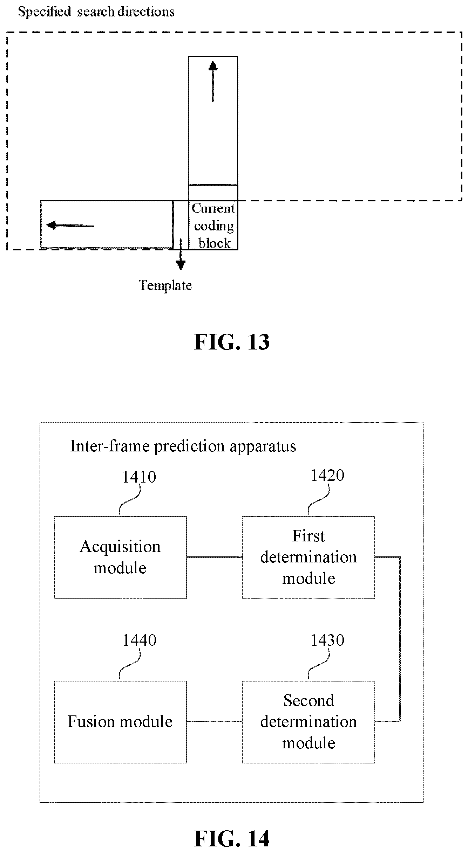

   FIG. 13 is another schematic diagram of a configuration of a candidate split mode according to an embodiment of the present application. With specified search directions shown in FIG. 13 as an example, the neighborhood is searched for all the known split modes, and the known split modes are extended. In FIG. 13, the template is the template region in the preceding embodiment, and current CU represents the current coding block. In the case where the extension line intersects the current coding block, the split mode closest to the extension line in the current coding block is calculated from the 64 split modes and used as the candidate split mode. A total of N candidate split modes are obtained in the neighborhood of w×h.
(3) The candidate split modes obtained in step 2 are traversed, the N split modes are separately extended on the template region of the current coding block, the GPM inter-frame prediction is performed according to steps 1 to 5 in the preceding embodiment, and the RDO costs are calculated.
(4) The 64 split modes are traversed in the current coding block, the GPM inter-frame prediction is performed, and the RDO costs are calculated.
(5) The prediction mode with the minimum RDO cost is selected. If the minimum RDO cost is obtained in step 3, it is indicated in the bitstream that the GPM uses the SM prediction method. If the minimum RDO cost is obtained in step 4, it is indicated in the bitstream that the GPM does not use the SM prediction method, and the index of the split mode selected for the current coding block among the 64 split modes is indicated.

In an embodiment, this embodiment provides an inter-frame prediction method used in a video decoding process. When a current coding block uses an inter-frame prediction mode based on a geometric partitioning mode, a split mode of the current block is predicted in a manner the same as that of an encoding end, and a predicted value of the current block is obtained. Two syntax structures are used as examples to describe specific implementations.

In an implementation manner, a split mode candidate list is included.

In this embodiment, a decoding end determines, according to a syntax element in a video coding bitstream, that a current decoding process uses an SM prediction method. The decoding end establishes the candidate list in the same manner as the encoding end and reads an index in the candidate list to complete GPM inter-frame prediction. Specific steps are described below.
(1) A current video frame is acquired, the video coding bitstream is parsed, and a coding block, CU, in the current video frame is determined.
   In an embodiment, an image division structure divides the input current video frame into blocks referred to as CTUs and divides one CTU into CUs by using a quadtree with a nested multi-type tree structure, where a CU is a leaf coding unit with a region that uses the inter-frame prediction mode.
(2) The video coding bitstream is parsed, and it is identified according to a split mode prediction indicator of a CU layer that the current CU uses the SM prediction method.
(3) In neighboring blocks of the current coding block, the split mode candidate list (SMList) is constructed according to a preset sequence and a split mode of a neighboring coding block or an extension line of the split mode of the neighboring coding block. For a construction manner, reference is made to the implementations in the preceding embodiments.
(4) According to the split mode prediction indicator of the CU layer, the split mode is selected from the candidate list obtained in step 3.
(5) The GPM inter-frame prediction is performed on the current coding block in the split mode obtained in step 4.

In an embodiment, the current coding block is split into two non-rectangular sub-partitions, and an MV candidate list in the GPM is generated based on an MV candidate list in a merge mode. According to a merge list index of the CU layer, an MV is selected from the list to perform unidirectional motion compensation on each sub-partition so that two unidirectional predicted values of the current coding block are obtained. A fusion matrix is obtained according to the distance from a pixel in each partition to a split line, and the matrix is used to perform a weighted fusion on the unidirectional predicted values of the two partitions so that the final predicted value of the current coding block is obtained.

In an implementation manner, template matching is included.

In this embodiment, the decoding end determines, according to the syntax element in the video coding bitstream, that the current decoding process uses the SM prediction method. The decoding end searches for the optimal split mode in the same manner as the encoding end to complete the GPM inter-frame prediction. Specific steps are described below.
(1) The current video frame is acquired, the video coding bitstream is parsed, and the coding block, CU, in the current video frame is determined.
   In an embodiment, the image division structure divides the input current video frame into the blocks referred to as the CTUs and divides one CTU into the CUs by using the quadtree with the nested multi-type tree structure, where the CU is the leaf coding unit with the region that uses the inter-frame prediction mode.
(2) The video coding bitstream is parsed, and it is identified according to the split mode prediction indicator of the CU layer that the current CU uses the SM prediction method.
(3) According to a preset sequence of neighboring blocks, a preset neighboring range, or a preset direction, a neighborhood of the current coding block is searched for candidate split modes. For the generation of the candidate split modes, reference is made to the implementations in the preceding embodiment.
(4) According to the candidate split modes obtained in step 3, the N split modes are separately extended on a template region of the current coding block, the GPM inter-frame prediction is separately performed, RDO costs are calculated, and a split mode corresponding to a minimum RDO cost is determined as the split mode of the current coding block.
(5) The GPM inter-frame prediction is performed on the current coding block in the split mode obtained in step 4.

In an embodiment, the current coding block is split into the two non-rectangular sub-partitions, and the MV candidate list in the GPM is generated based on the MV candidate list in the merge mode. According to the merge list index of the CU layer, the MV is selected from the list to perform unidirectional motion compensation on each sub-partition so that the two unidirectional predicted values of the current coding block are obtained. The fusion matrix is obtained according to the distance from the pixel in each partition to the split line, and the matrix is used to perform the weighted fusion on the unidirectional predicted values of the two partitions so that the final predicted value of the current coding block is obtained.

In an embodiment, the decoding end determines, according to the syntax element in the video coding bitstream, that the current decoding process does not use the SM prediction method and reads an index representing one of traditional 64 split modes to complete the GPM inter-frame prediction. Specific steps are described below.
(1) The current video frame is acquired, the video coding bitstream is parsed, and the coding block, CU, in the current video frame is determined.
   In an embodiment, the image division structure divides the input current video frame into the blocks referred to as the CTUs and divides one CTU into the CUs by using the quadtree with the nested multi-type tree structure, where the CU is the leaf coding unit with the region that uses the inter-frame prediction mode.
(2) The video coding bitstream is parsed, and it is identified according to the split mode prediction indicator of the CU layer that the current CU does not use the SM prediction method.
(3) The split mode of the current coding block is determined according to a split mode index of the CU layer.
(4) The GPM inter-frame prediction is performed on the current coding block in the split mode obtained in step 3 so that the predicted value of the current coding block is obtained.

In an embodiment, FIG. 14 is a block diagram of an inter-frame prediction apparatus according to an embodiment of the present application. This embodiment is applied to an encoding end. As shown in FIG. 14, the inter-frame prediction apparatus in this embodiment includes an acquisition module 1410, a first determination module 1420, a second determination module 1430, and a fusion module 1440.

The acquisition module 1410 is configured to acquire a current video frame and determine a current coding block in the current video frame.

The first determination module 1420 is configured to determine a first predicted value and a second predicted value of the current coding block.

The second determination module 1430 is configured to determine a geometric partitioning mode parameter of the current coding block according to a geometric partitioning mode parameter of a target coding block corresponding to the current coding block.

The fusion module 1440 is configured to perform a weighted fusion on the first predicted value and the second predicted value according to the geometric partitioning mode parameter of the current coding block to obtain a predicted value of the current coding block.

In an embodiment, the second determination module includes a first construction unit and a first determination unit.

The first construction unit is configured to construct a split mode candidate list corresponding to the current coding block according to the geometric partitioning mode parameter of the target coding block corresponding to the current coding block.

The first determination unit is configured to determine the geometric partitioning mode parameter of the current coding block according to the split mode candidate list.

In an embodiment, the target coding block includes a neighboring coding block; and the first construction unit includes a first acquisition subunit and a first construction subunit.

The first acquisition subunit is configured to acquire a geometric partitioning mode parameter of a neighboring coding block corresponding to the current coding block.

The first construction subunit is configured to construct the split mode candidate list corresponding to the current coding block according to the geometric partitioning mode parameter of the neighboring coding block.

In an embodiment, the target coding block includes the neighboring coding block; and the first construction unit includes a second acquisition subunit, a first search subunit, and a second construction subunit.

The second acquisition subunit is configured to acquire the geometric partitioning mode parameter of the neighboring coding block corresponding to the current coding block.

The first search subunit is configured to determine an extension line of a geometric partitioning mode corresponding to the geometric partitioning mode parameter of the neighboring coding block in the current coding block and search a split mode total list for a split mode matching the extension line.

The second construction subunit is configured to construct the split mode candidate list corresponding to the current coding block according to the split mode matching the extension line, where the number of split modes included in the split mode candidate list is less than or equal to the number of neighboring coding blocks.

In an embodiment, the first determination unit includes a first determination subunit and a second determination subunit.

The first determination subunit is configured to perform, according to a preset sequence, inter-frame prediction on the current coding block in each split mode in the split mode candidate list to obtain a rate-distortion cost corresponding to each split mode as a first rate-distortion cost.

The second determination subunit is configured to determine the geometric partitioning mode parameter of the current coding block according to the first rate-distortion cost.

In an embodiment, the first determination unit includes a third determination subunit, a fourth determination subunit, and a fifth determination subunit.

The third determination subunit is configured to perform the inter-frame prediction on the current coding block in each split mode in the split mode candidate list to obtain the rate-distortion cost corresponding to each split mode as the first rate-distortion cost.

The fourth determination subunit is configured to perform the inter-frame prediction on the current coding block in each split mode in a split mode difference list to obtain a rate-distortion cost corresponding to each split mode as a second rate-distortion cost, where the split mode difference list is a difference set between the split mode total list and the split mode candidate list.

The fifth determination subunit is configured to determine the geometric partitioning mode parameter of the current coding block according to the first rate-distortion cost and the second rate-distortion cost.

In an embodiment, the second determination module includes an acquisition unit, a second construction unit, and a second determination unit.

The acquisition unit is configured to acquire the geometric partitioning mode parameter of the target coding block in the current video frame.

The second construction unit is configured to construct the split mode candidate list corresponding to the current coding block according to the geometric partitioning mode parameter of the target coding block.

The second determination unit is configured to determine the geometric partitioning mode parameter of the current coding block in a template matching manner according to the split mode candidate list.

In an embodiment, the second construction unit includes a second search subunit and a third construction subunit.

The second search subunit is configured to search, according to an extension line, in the current coding block, of the geometric partitioning mode parameter of the target coding block in the current video frame, the split mode total list for a split mode matching the extension line.

The third construction subunit is configured to construct the split mode candidate list corresponding to the current coding block according to the split mode matching the extension line.

In an embodiment, the target coding block in the current video frame includes the neighboring coding block of the current coding block in the current video frame, a coding block in a preset neighboring range of the current coding block in the current video frame, or a coding block searched for along a preset direction of the current coding block in the current video frame.

In an embodiment, the second determination unit includes a fourth construction subunit, a sixth determination subunit, and a seventh determination subunit.

The fourth construction subunit is configured to construct a template region corresponding to the current coding block in the current video frame.

The sixth determination subunit is configured to perform the inter-frame prediction on the template region in each split mode in the split mode candidate list to obtain a rate-distortion cost corresponding to each split mode as a third rate-distortion cost.

The seventh determination subunit is configured to determine the geometric partitioning mode parameter of the current coding block according to the third rate-distortion cost.

In an embodiment, the second determination unit includes an eighth determination subunit, a ninth determination subunit, and a tenth determination subunit.

The eighth determination subunit is configured to perform the inter-frame prediction on the template region in each split mode in the split mode candidate list to obtain the rate-distortion cost corresponding to each split mode as the third rate-distortion cost.

The ninth determination subunit is configured to perform the inter-frame prediction on the current coding block in each split mode in the split mode total list to obtain a rate-distortion cost corresponding to each split mode as a fourth rate-distortion cost.

The tenth determination subunit is configured to determine the geometric partitioning mode parameter of the current coding block according to the third rate-distortion cost and the fourth rate-distortion cost.

The inter-frame prediction apparatus of this embodiment is configured to implement the inter-frame prediction method applied to the encoding end according to the embodiment shown in FIG. 3. The implementation principles and technical effects of the inter-frame prediction apparatus of this embodiment are similar to those of the inter-frame prediction method and thus are not described again here.

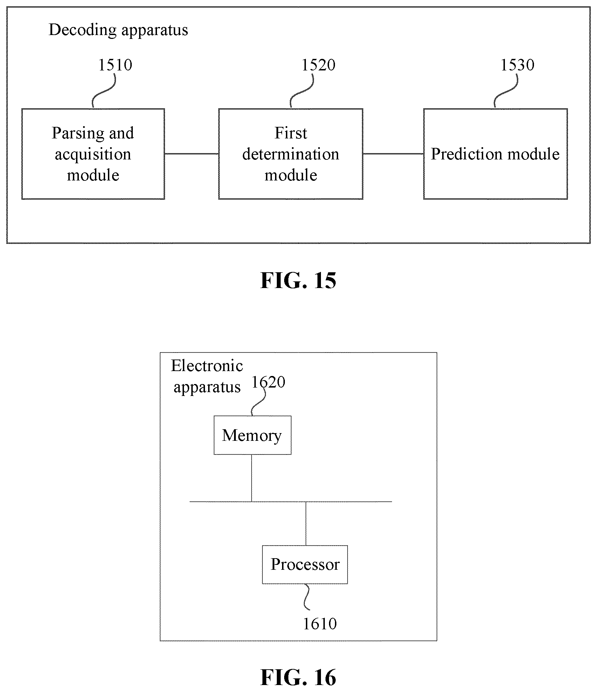

In an embodiment, FIG. 15 is a block diagram of a decoding apparatus according to an embodiment of the present application. This embodiment is applied to a decoding end. As shown in FIG. 15, the decoding apparatus in this embodiment includes a parsing and acquisition module 1510, a first determination module 1520, and a prediction module 1530.

The parsing and acquisition module 1510 is configured to parse a video coding bitstream and acquire a predictive decoding parameter of a current coding block in a current video frame.

The first determination module 1520 is configured to determine a geometric partitioning mode parameter of the current coding block according to the predictive decoding parameter.

The prediction module 1530 is configured to perform inter-frame prediction on the current coding block using the geometric partitioning mode parameter.

In an embodiment, the first determination module includes a first acquisition unit, a first determination unit, a first construction unit, and a second determination unit.

The first acquisition unit is configured to acquire a split mode prediction indicator.

The first determination unit is configured to, in the case where the split mode prediction indicator has a first value, determine that the current coding block uses a split mode prediction method.

The first construction unit is configured to construct a split mode candidate list corresponding to the current coding block by the inter-frame prediction method according to any one of the preceding embodiments.

The second determination unit is configured to determine the geometric partitioning mode parameter of the current coding block according to a split mode prediction index and the split mode candidate list.

In an embodiment, the split mode prediction index is used for identifying an index of a split mode of the current video frame in the split mode candidate list.

In an embodiment, the first determination module includes the first acquisition unit, the first determination unit, a second construction unit, and a third determination unit.

The first acquisition unit is configured to acquire the split mode prediction indicator.

The first determination unit is configured to, in the case where the split mode prediction indicator has the first value, determine that the current coding block uses the split mode prediction method.

The second construction unit is configured to construct the split mode candidate list corresponding to the current coding block by the inter-frame prediction method according to any one of the preceding embodiments.

The third determination unit is configured to determine the geometric partitioning mode parameter of the current coding block in a template matching manner according to the split mode candidate list.

In an embodiment, the first determination module includes a second acquisition unit, a fourth determination unit, and a fifth determination unit.

The second acquisition unit is configured to acquire the split mode prediction indicator.

The fourth determination unit is configured to, in the case where the split mode prediction indicator has a second value, determine that the current coding block does not use the split mode prediction method.

The fifth determination unit is configured to determine the geometric partitioning mode parameter of the current coding block according to the split mode prediction index and a pre-created split mode total list.

The decoding apparatus of this embodiment is configured to implement the decoding method applied to the decoding end according to the embodiment shown in FIG. 4. The implementation principles and technical effects of the decoding apparatus of this embodiment are similar to those of the decoding method and thus are not described again here.

In an embodiment, FIG. 16 is a structural diagram of an electronic device according to an embodiment of the present application. As shown in FIG. 16, the electronic device of the present application includes a processor 1610 and a memory 1620. One or more processors 1610 may be provided in the electronic device, with one processor 1610 shown as an example in FIG. 16. One or more memories 1620 may be provided in the electronic device, with one memory 1620 shown as an example in FIG. 16. The processor 1610 and the memory 1620 of the electronic device may be connected via a bus or in other manners. The connection via a bus is shown as an example in FIG. 16. In this embodiment, the electronic device may be a decoding end or an encoding end.

As a computer-readable storage medium, the memory 1620 may be configured to store software programs, computer-executable programs, and modules, such as program instructions/modules corresponding to the electronic device according to any embodiment of the present application (for example, the acquisition module 1410, the first determination module 1420, the second determination module 1430, and the fusion module 1440 in the inter-frame prediction apparatus). The memory 1620 may include a program storage region and a data storage region. The program storage region may store an operating system and an application program required by at least one function. The data storage region may store data created according to the use of the electronic device. Additionally, the memory 1620 may include a high-speed random-access memory and may also include a nonvolatile memory such as at least one magnetic disk memory, a flash memory, or another nonvolatile solid-state memory. In some examples, the memory 1620 may further include memories that are remotely disposed with respect to the processor 1610. These remote memories may be connected to the electronic device via a network. Examples of the preceding network include, but are not limited to, the Internet, an intranet, a local area network, a mobile communication network, and a combination thereof.

In the case where the electronic device is the encoding end, the preceding electronic device may be configured to perform the inter-frame prediction method applied to the encoding end according to any one of the preceding embodiments and has functions and effects corresponding to the inter-frame prediction method.

In the case where the electronic device is the decoding end, the preceding electronic device may be configured to perform the decoding method applied to the decoding end according to any one of the preceding embodiments and has functions and effects corresponding to the decoding method.

An embodiment of the present application provides a storage medium storing computer-executable instructions which, when executed by a computer processor, cause the processor to perform an inter-frame prediction method applied to an encoding end. The method includes acquiring a current video frame and determining a current coding block in the current video frame; determining a first predicted value and a second predicted value of the current coding block; determining a geometric partitioning mode parameter of the current coding block; and performing a weighted fusion on the first predicted value and the second predicted value according to the geometric partitioning mode parameter of the current coding block to obtain a predicted value of the current coding block.

An embodiment of the present application provides a storage medium storing computer-executable instructions which, when executed by a computer processor, cause the processor to perform a decoding method applied to a decoding end. The method includes parsing a video coding bitstream and acquiring a predictive decoding parameter of a current coding block in a current video frame; determining a geometric partitioning mode parameter of the current coding block according to the predictive decoding parameter; and performing inter-frame prediction on the current coding block using the geometric partitioning mode parameter.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The preceding describes optional embodiments of the present application that are not intended to limit the present application. For those skilled in the art, the present application may have various modifications and variations. Any modifications, equivalent substitutions, improvements, and the like made within the spirit and principle of the present application are within the scope of the present application.

## Claims

1. An inter-frame prediction method, comprising:
acquiring a current video frame and determining a current coding block in the current video frame;
determining a first predicted value and a second predicted value of the current coding block;
determining a geometric partitioning mode parameter of the current coding block according to a geometric partitioning mode parameter of a target coding block corresponding to the current coding block; and
performing a weighted fusion on the first predicted value and the second predicted value according to the geometric partitioning mode parameter of the current coding block to obtain a predicted value of the current coding block.

2. The method of claim 1, wherein determining the geometric partitioning mode parameter of the current coding block according to the geometric partitioning mode parameter of the target coding block corresponding to the current coding block comprises:
constructing a split mode candidate list of the current coding block according to the geometric partitioning mode parameter of the target coding block corresponding to the current coding block; and
determining the geometric partitioning mode parameter of the current coding block according to the split mode candidate list.

3. The method of claim 2, wherein the target coding block comprises a neighboring coding block; and constructing the split mode candidate list corresponding to the current coding block according to the geometric partitioning mode parameter of the target coding block corresponding to the current coding block comprises:
acquiring a geometric partitioning mode parameter of the neighboring coding block corresponding to the current coding block; and
constructing the split mode candidate list corresponding to the current coding block according to the geometric partitioning mode parameter of the neighboring coding block.

4. The method of claim 2, wherein the target coding block comprises a neighboring coding block; and constructing the split mode candidate list corresponding to the current coding block according to the geometric partitioning mode parameter of the target coding block corresponding to the current coding block comprises:
acquiring a geometric partitioning mode parameter of the neighboring coding block corresponding to the current coding block;
determining an extension line of a geometric partitioning mode corresponding to the geometric partitioning mode parameter of the neighboring coding block in the current coding block, and searching a split mode total list for a split mode matching the extension line; and
constructing the split mode candidate list according to the split mode matching the extension line, wherein a number of split modes comprised in the split mode candidate list is less than or equal to a number of neighboring coding blocks.

5. The method of any one of claims 2 to 4, wherein determining the geometric partitioning mode parameter of the current coding block according to the split mode candidate list comprises:
according to a preset sequence, performing inter-frame prediction on the current coding block in each split mode in the split mode candidate list to obtain a rate-distortion cost corresponding to each split mode as a first rate-distortion cost; and
determining the geometric partitioning mode parameter of the current coding block according to the first rate-distortion cost.

6. The method of any one of claims 2 to 4, wherein determining the geometric partitioning mode parameter of the current coding block according to the split mode candidate list comprises:
performing inter-frame prediction on the current coding block in each split mode in the split mode candidate list to obtain a rate-distortion cost corresponding to each split mode as a first rate-distortion cost;
performing the inter-frame prediction on the current coding block in each split mode in a split mode difference list to obtain a rate-distortion cost corresponding to each split mode as a second rate-distortion cost, wherein the split mode difference list is a difference set between a split mode total list and the split mode candidate list; and
determining the geometric partitioning mode parameter of the current coding block according to the first rate-distortion cost and the second rate-distortion cost.

7. The method of claim 1, wherein determining the geometric partitioning mode parameter of the current coding block according to the geometric partitioning mode parameter of the target coding block corresponding to the current coding block comprises:
acquiring the geometric partitioning mode parameter of the target coding block in the current video frame;
constructing a split mode candidate list corresponding to the current coding block according to the geometric partitioning mode parameter of the target coding block; and
determining the geometric partitioning mode parameter of the current coding block in a template matching manner according to the split mode candidate list.

8. The method of claim 7, wherein constructing the split mode candidate list corresponding to the current coding block according to the geometric partitioning mode parameter of the target coding block comprises:
according to an extension line, in the current coding block, of the geometric partitioning mode parameter of the target coding block in the current video frame, searching a split mode total list for a split mode matching the extension line; and
constructing the split mode candidate list according to the split mode matching the extension line.

9. The method of claim 7 or 8, wherein the target coding block in the current video frame comprises:
a neighboring coding block of the current coding block in the current video frame,
a coding block in a preset neighboring range of the current coding block in the current video frame, or
a coding block searched for along a preset direction of the current coding block in the current video frame.

10. The method of claim 7 or 8, wherein determining the geometric partitioning mode parameter of the current coding block in the template matching manner according to the split mode candidate list comprises:
constructing a template region corresponding to the current coding block in the current video frame;
performing inter-frame prediction on the template region in each split mode in the split mode candidate list to obtain a rate-distortion cost corresponding to each split mode as a third rate-distortion cost; and
determining the geometric partitioning mode parameter of the current coding block according to the third rate-distortion cost.

11. The method of claim 7 or 8, wherein determining the geometric partitioning mode parameter of the current coding block in the template matching manner according to the split mode candidate list comprises:
constructing a template region corresponding to the current coding block in the current video frame;
performing inter-frame prediction on the template region in each split mode in the split mode candidate list to obtain a rate-distortion cost corresponding to each split mode as a third rate-distortion cost;
performing the inter-frame prediction on the current coding block in each split mode in a split mode total list to obtain a rate-distortion cost corresponding to each split mode as a fourth rate-distortion cost; and
determining the geometric partitioning mode parameter of the current coding block according to the third rate-distortion cost and the fourth rate-distortion cost.

12. A decoding method, comprising:
parsing a video coding bitstream and acquiring a predictive decoding parameter of a current coding block in a current video frame;
determining a geometric partitioning mode parameter of the current coding block according to the predictive decoding parameter; and
performing inter-frame prediction on the current coding block using the geometric partitioning mode parameter.

13. The method of claim 12, wherein determining the geometric partitioning mode parameter of the current coding block according to the predictive decoding parameter comprises:
acquiring a split mode prediction indicator;
in response to the split mode prediction indicator having a first value, determining that the current coding block uses a split mode prediction method;
constructing a split mode candidate list corresponding to the current coding block by the inter-frame prediction method of any one of claims 1 to 6; and
determining the geometric partitioning mode parameter of the current coding block according to a split mode prediction index and the split mode candidate list, wherein the split mode prediction index is used for identifying an index of a split mode of the current video frame in the split mode candidate list.

14. The method of claim 12, wherein determining the geometric partitioning mode parameter of the current coding block according to the predictive decoding parameter comprises:
acquiring a split mode prediction indicator;
in response to the split mode prediction indicator having a first value, determining that the current coding block uses a split mode prediction method;
constructing a split mode candidate list corresponding to the current coding block by the inter-frame prediction method of any one of claims 1 and 7 to 11; and
determining the geometric partitioning mode parameter of the current coding block in a template matching manner according to the split mode candidate list.

15. The method of claim 12, wherein determining the geometric partitioning mode parameter of the current coding block according to the predictive decoding parameter comprises:
acquiring a split mode prediction indicator;
in response to the split mode prediction indicator having a second value, determining that the current coding block does not use a split mode prediction method; and
determining the geometric partitioning mode parameter of the current coding block according to a split mode prediction index and a pre-created split mode total list.

16. An electronic device, comprising: a memory and at least one processor;
wherein the memory is configured to store at least one program; and
when executed by the at least one processor, the at least one program causes the at least one processor to perform the method of any one of claims 1 to 11 or the method of any one of claims 12 to 15.

17. A storage medium, configured to store a computer program which, when executed by a processor, causes the processor to perform the method of any one of claims 1 to 11 or the method of any one of claims 12 to 15.
